# EUROPEAN PATENT APPLICATION

(11) **EP 4 768 383 A1**
(43) Date of publication of application: **01.07.2026**
(21) Application number: 25184761.2
(22) Date of filing: 24.06.2025
(51) Int. Cl.: B64C 1/14, B64D 25/08, B64C 1/32, E05D 7/12

(54) **EVACUATION MECHANISM**

(30) Priority: 30.12.2024 TR 2024021410
(71) Applicant: Tusas- Turk Havacilik Ve Uzay Sanayii Anonim Sirketi, 06980 Ankara (TR)
(72) Inventor: SANLI, Tahir Volkan, 06980 ANKARA (TR); TOSUN, Mehmet, 06980 ANKARA (TR); DODA, Pinar, 06980 ANKARA (TR); GULTEKIN, Nilay, 06980 ANKARA (TR)
(74) Representative: Berkkam, Ayfer

(57) **Abstract**

This invention, relates to a body (2), a door (3) on the body (2), which allows the user access to the body (2) or prevents access to the body (2), at least one hinge (4) on the door (3), allowing the door (3) to be supported on the body (2) and allowing the door (3) to be opened by pivoting around the axis on which it is supported on the body (2), at least one trigger (5) to trigger the door (3), a first hinge channel (6) located on the hinge (4) and having a through opening, at least one hinge pin (7) located on the hinge (4) and extending along its length, a closed position (I) in which the door (3) encloses the body (2) in a form-fitting manner, the door (3) being closed on the body (2), an open position (II) in which the hinge pin (7) contacts the first hinge channel (6) within the first hinge channel (6), the door (3) being moved outwardly from the body (2) by means of rotation of the hinge (4) from the closed position (I) to allow the user to access the body (2), an emergency trigger position (III) in which the hinge pin (7) protrudes from the first hinge channel (6) and there is a distance between the first hinge channel (6) and the hinge pin (7), in which the trigger (5) is triggered in the event that the user needs to be evacuated from the body (2), an evacuation position (IV) in which the door (3) is brought from the emergency trigger position (III) so that the hinge (4) and the body (2) move independently of each other, and the door (3) and hinge (4) are pushed out of the body (2), allowing the user to evacuate from the body (2), at least one latch (8) located on the door (3), which allows the door (3) to be locked, at least one latch holder (9) located on the body (2), which enables the door (3) to be locked in the closed position (I) by being placed in the latch (8), and which enables the door (3) to be opened in the open position (II) when it is brought out of the latch (8) so as to keep a distance between it and the latch (8).

## Description

This invention relates to an evacuation mechanism in military attack helicopters, which allows the cockpit door to be opened and closed in routine operation, and in an emergency, the pilot door is ejected from the aircraft, allowing the pilot to safely exit the helicopter.

In attack helicopters, when an emergency situation with a risk of accidental destruction occurs, the pilot must be safely evacuated from the helicopter. In this context, there are applications in which the structural connection between the door and the fuselage is disconnected by removing the hinge pins that connect the helicopter door with the fuselage by triggering the emergency handle when the pilot realises that an accident will occur. In attack helicopters, the door must be separated from the fuselage in case of the aforementioned risk of accidental breakage, while the helicopter door must be effectively locked in the locked position and opened smoothly in the open position during routine operation. In addition, in the event of failure of the latch that provides the lock in an emergency situation with the risk of accidental breakage, the door may remain locked on the fuselage even though the door is structurally disconnected from the fuselage by means of hinges, and therefore it may not be possible to eject the door from the helicopter. In order to prevent this situation, there is a need for a door release system that allows the door to be safely evacuated from the helicopter even if the latch that provides the lock is broken.

In the European patent document numbered EP1332962B1, which is included in the state of the art, a throwable aircraft door is mentioned. In the document, it is explained that when the guide unit, the ejection trigger unit controls the mechanical displacement of a joint according to the separation of the stops from the mechanical elements, it provides a downward displacement of a panel based on the force of gravity. The handle is connected to the axes of the hinges and the mechanical elements by a suitable mechanism. This mechanism ensures that the actuation of the handle in the ejection direction has the effect, on the one hand, of moving the pivot axes jointly along their geometrical axes in such a way that the fixed elements and the moving elements are mechanically disconnected, and on the other hand, of mechanically pulling the second elements back into the frame, so that said second elements are separated from the stops. The panel falls by gravity because the guide rails are open downwards. The translation of the vertical parts of the frame by triggering the handle has the effect of sliding the second mechanical elements into the holes. The second stops are separated from the second mechanical elements and the door releases the panel.

In the European patent document numbered EP3100947B1, which is included in the state of the art, a disposable emergency exit for a vehicle is mentioned. In the document, the activation lever housed and held in the disposable emergency exit is triggered from an initial position defined by the disposable emergency exit and moved to various positions. The locking hook engages in a frame groove in the associated wood side sliding door frame provided in the helicopter's wood side sliding door arrangement. In the emergency mode of the disposable emergency exit, a locking hook is retracted from the frame groove by means of a rotational movement triggered by the emergency exit activation belt, thereby ensuring that the disposable emergency exit does not interfere with the rotational and translational movements.

In the patent document originating in the United States of America numbered US5400985, which is included in the state of the art, the aircraft escape slide system and the rotating rod for it are mentioned. The activating/deactivating mechanism further comprises a lower part fixed to the cabin floor comprising a restraint mechanism gripping the end portion of the swivel rod in accordance with the appropriate positioning of the mode selector lever of the escape system when the escape system is in the activated mode. An exemplary swivel bar of the invention comprises an elongate center portion having a rectangular cross-section and a longitudinal axis indicated by a line, and cylindrical end fittings at opposite ends parallel to the longitudinal axis of the swivel bar. Each of the cylindrical end fittings is fixed to the cabin floor by means of a specified restraint mechanism.

A door evacuation mechanism developed with this invention enables the door to be ejected from the helicopter in the event of failure of the latch that provides locking, thus enabling the pilot to be evacuated from the helicopter.

Another object of the invention is to ensure that the structural connection of the hinge between the door and the body and the latch locks are disengaged in a short time and simultaneously with a single triggering movement of the pilot.

A further object of the invention is to enable the door to be locked at multiple points on the body in routine operation.

Another object of the invention is to enable the door to rotate on the body in routine operation.

A further object of the invention is to enable the door to be ejected by pushing linearly outwards from the body.

The evacuation mechanism defined in the first claim and the claims dependent thereon, which are realised to achieve the object of the invention, comprises a body. The door is located on the fuselage, allowing the user to access the fuselage or restricting access to the fuselage. The door surrounds the cockpit in which the pilot is located. The door closes the opening on the fuselage. The hinge is located on the door and allows the door to be rotatably attached to the fuselage, allowing the door to be opened and closed by rotation. The trigger allows the door to be moved by the user. In alternative embodiments, the trigger can be triggered automatically by means of an actuator. The first hinge channel is the longitudinal channel on the hinge. The hinge pin is located on the hinge and extends along its length and is preferably cylindrical in shape. In the closed position (I), the door encircles the body in a form-fitting manner and the door is closed on the body. In the open position (II), the hinge pin is located in the first hinge channel in structural connection with the first hinge channel. The open position (II) is achieved by the user pushing the door outwards from the closed position (I) and rotating the door around the hinge so that the user can access the body. In the emergency trigger position (III), the hinge pin is out of the first hinge channel and there is a distance between the first hinge channel and the hinge pin. Emergency trigger position (III) is the position where the user triggers the trigger in an emergency situation where the user needs to evacuate from the body and there is a risk of accidental breakage. Evacuation position (IV) is the position where the door is moved away from the body independently of the body with the hinge from the emergency trigger position (III), thus allowing the user to evacuate. The latch is located on the door and ensures that the door is locked. The latch holder is located on the body. In the closed position (I), the latch holder is located in the latch, thus locking the door. In the open position (II), the latch holder comes out of the latch, remains on the body and allows the door to be opened.

The inventive release mechanism comprises a first latch channel. The first latch channel is located on the body in alignment with the latch in the closed position (I) and extends along its length. A body recess is provided between the first latch channel extending opposite each other. The latch pin is a longitudinally extending, preferably cylindrical, structural part which is capable of linear sliding movement within the first latch channel. The second latch channel is located on the latch holder and extends along its length. The latch pin is located in the first latch channel and the second latch channel in the closed position (I). In the open position (II), the latch pin is out of the first latch channel and the second latch channel. In the open position (II), the latch pin ensures that the latch holder remains on the body and the door is brought to the open position (II). From the closed position (I), the latch pin comes out of the second latch channel and is brought into the first latch channel when the user rotates the trigger. In this way, the user can be evacuated from the body by leaving the latch and latch holder on the door in the evacuation position (IV).

In one embodiment of the invention, the evacuation mechanism comprises a body cavity. The body cavity is located on the body. The body cavity is in the form of a cavity, thereby allowing a latch holder to enter therein. There is a latch cavity on the latch and the latch holder can enter and exit the latch cavity. The latch hook is located on the latch. The latch hook provides the structural connection of the latch and the latch holder by encircling the latch holder so that the latch holder remains in the latch cavity to keep the latch locked in the closed position (I), emergency trigger position (III) and evacuation position (IV). The latch spring generates the force that keeps the latch hook surrounding the latch cavity so that the latch remains locked. The latch spring is a torsion spring type spring. The latch holder body is located on the latch holder and the form is compatible with the body. Latch holder shaft is the extension extending from the latch holder body in such a way that it is opposite to the latch. In the open position (II), the latch holder shaft is located outside the latch cavity and on the body, thus ensuring the structural disconnection of the latch and the latch holder. The latch retainer shaft is located inside the latch cavity in the closed position (I), emergency trigger position (III) and evacuation position (IV) to ensure the structural connection of the latch and the latch retainer. The latch holder block extends from the latch holder body in such a way that it faces the body. There is a second latch channel in the latch holder block, so that the latch holder remains on the body in the open position (II) and the latch holder is left on the door with the latch in the evacuation position (IV).

In one embodiment of the invention, the release mechanism comprises a hinge interface. The hinge interface is located between the body and the hinge, provides the structural connection of the hinge with the body by ensuring the contact of the hinge with the body, and provides the structural disconnection of the hinge and the body by separating the hinge from the body. There is a hinge slot located on the hinge interface, which is hollow towards the body. The clevis pin (clevis) is fixed on the body by inserting into the hinge slot and inserting the hinge pin into it, thus allowing the hinge to move rotatably. The release mechanism comprises a second hinge channel. The second hinge channel is located on the cotter pin, extends along a direction which is equidistant from the direction in which the hinge pin extends, and is perpendicular to the direction in which the cotter pin extends. The second hinge groove lies in the same direction as the first hinge groove in the closed position (I), open position (II) and emergency trigger position (III). In the closed position (I) and open position (II), the hinge pin is located inside the second hinge channel, in the emergency trigger position (III), the hinge pin is removed from the second hinge channel, and in the evacuation position (IV), there is a distance between the second hinge channel and the first hinge channel.

In one embodiment of the invention, the evacuation mechanism comprises at least one guide part on the body so that the evacuation mechanism is located between the body and the latch holder, which allows the latch holder to be moved from the emergency trigger position (III) to the evacuation position (IV) in an aligned manner. The guide piece remains fixed on the housing in all positions. The guide part is provided with a groove in the form of a recess on the guide part. There is a latch holder body on the latch holder, which is form-compatible with the guide part. There is a latch holder block, which is the extension extending from the latch holder body facing the guide part, in which the second latch channel is located in a longitudinal direction. The third latch channel, which is a longitudinal channel on the guide part, is aligned with the body groove in the closed position (I), open position (II) and emergency trigger position (III), and is aligned in the same direction as the first latch channel and the second latch channel.

In one embodiment of the invention, the release mechanism comprises a trigger. The trigger is rotated by a user through an extension extending outwardly from the axis on which the rotating rod is supported. The evacuation mechanism comprises a rotating rod. A latch pin is provided in the upward extension of the swivel rod from the axis on which it is supported on the body.

The part of the rotating rod extending downwards from the axis on which it is supported on the body is connected to the transmission rod. The rotating rod is rotated about the support to which it is connected to the trigger by means of rotation of the trigger. The release mechanism comprises a transmission lever. The transmission lever is rotatably supported on the body and ensures that the rotary movement of the rotating rod is transmitted by means of the transmission rod. While the transfer lever is rotatably supported to the body at one point, it is connected to the transfer rod at the end close to the transfer rod and to the transfer rod at the end close to the transfer rod, and these points are located at different positions from each other, so that the linear motion is converted into rotary motion and transferred. The transfer rod transmits the rotary rod movement to the transfer lever.

In one embodiment of the invention, the release mechanism comprises a plurality of bellcranks. The bellcrank is supported on the housing and is rotatably disposed about the axis on which it is supported. The bellcrank is a hinged lever. The bellcrank is connected to the hinge pin and the latch pin, allowing the transfer lever movement to be transmitted simultaneously to the hinge pin and the latch pin. When the transfer lever rotates, it causes the transformation rod to move. The release mechanism includes the conversion rod. The conversion rod is rotatably connected to the transfer lever and the bellcrank. In this way, the conversion rod ensures that the movement of the transfer lever is transferred to the bellcrank. The release mechanism includes a hinge crank. The hinge crank is rotatably connected to the bellcrank and the hinge pin, so that the rotary movement of the bellcrank is transmitted to the hinge pin as a linear movement. The release mechanism includes a pawl crank. The latch crank is rotatably connected to the bellcrank and the latch pin, so that the rotary movement of the bellcrank is transmitted to the latch pin as a linear movement.

In one embodiment of the invention, the release mechanism comprises a transfer rod. The transfer rod is disposed between each successively disposed transfer lever. The transfer rods are located along the hinge and latch areas, so as to wrap around the door. In this way, when the user rotates the trigger, the rotating rod movement is transmitted to the hinge pin and latch pin simultaneously through the transfer levers.

In one embodiment of the invention, the release mechanism comprises a transfer rod. The transfer rod is connected to the transfer lever at a point between the point where the transfer lever is supported and the point where the transfer rod is supported on the transfer lever. This connection method provides an overcenter mounting relationship.

In one embodiment of the invention, the release mechanism comprises a door having an eccentric form. As the door is not in a straight form, but in a curved form, it has to be effectively locked on the body. The hinge is preferably arranged more than once on the door, so that the door in the curved form can be opened and closed in an aligned manner. The release mechanism comprises a transfer lever, a transfer rod, a bellcrank, a conversion rod, a hinge crank, a latch crank and a transfer rod, preferably arranged more than once along the door perimeter.

In one embodiment of the invention, in the closed position (I) of the release mechanism, the hinge pin is disengaged from the second hinge channel by the user rotating the trigger around its axis. Simultaneously, the latch pin is disengaged from the second latch channel. In this way, the door is brought to the emergency trigger position (III). In the emergency trigger position (III), the door has no structural connection with the body and the door can move independently of the body. After the emergency trigger position (III), the user pushes the door forwards so that the door is thrown out of the helicopter and falls. The door is then in the evacuation position (IV). In the evacuation position (IV), when the door is thrown out of the helicopter, an opening is formed in the area on the door side of the user. The user jumps through the aforementioned opening and safely evacuates himself from the helicopter. In the evacuation position (IV), the latch and the latch holder remain on the door, so that the user can safely leave the helicopter in case the latch lock function fails.

In one embodiment of the invention, the evacuation mechanism comprises a trigger with a handle which the user triggers to move the door between a closed position (I) and an emergency trigger position (III). The trigger is located in the fuselage in a position accessible to the pilot.

In one embodiment of the invention, the evacuation mechanism comprises a fuselage, which is a helicopter. By the fuselage is meant the frame enclosing the helicopter door.

The door release mechanism realised to achieve the object of the present invention is shown in the accompanying figures;

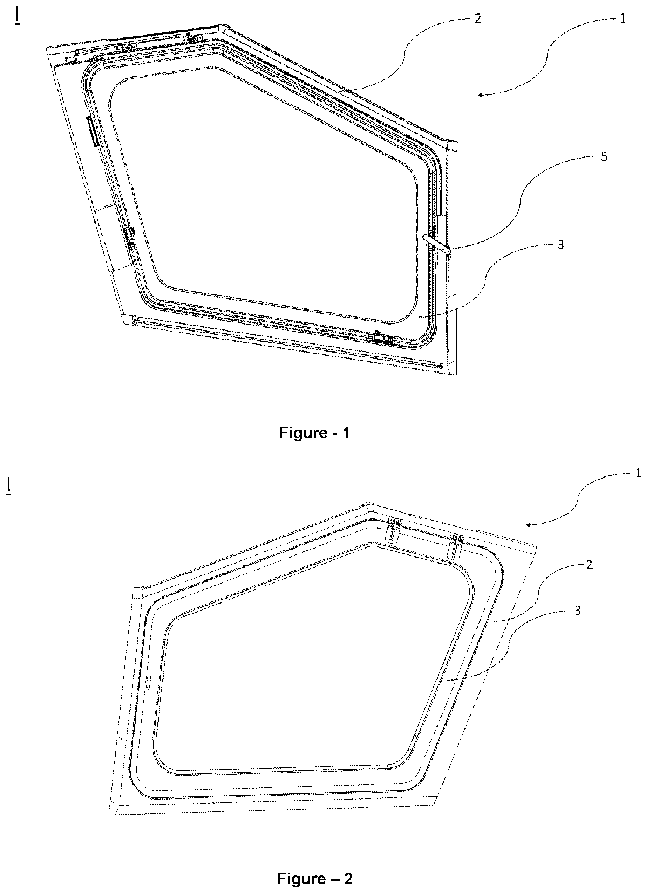

Figure 1 - Rear view of the door and body in closed position (I).
Figure 2 - Front view of the door and body in closed position (I).

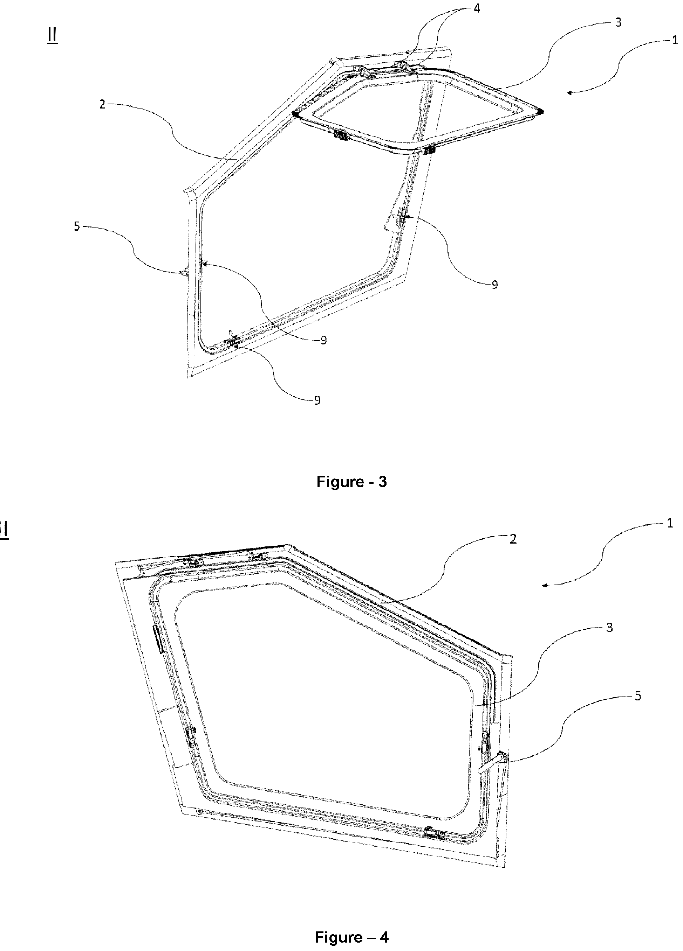

Figure 3 - Perspective view of the door and body in open position (II).
Figure 4 - Rear view of the door, body and trigger in emergency triggering position (III).

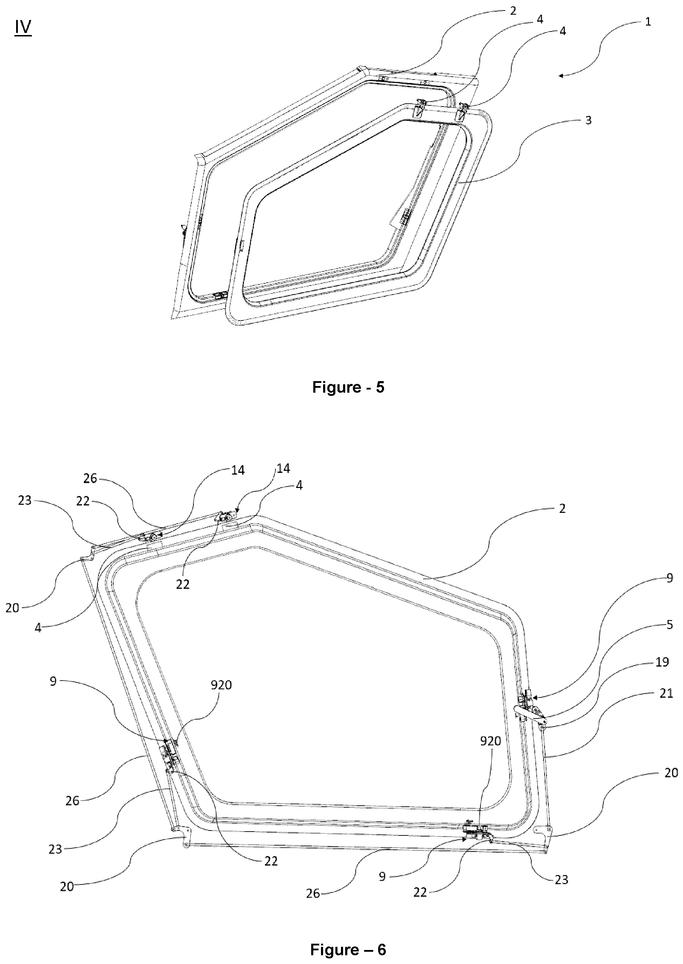

Figure 5 - Perspective view of door, body and hinges in evacuation position (IV).
Figure 6 - Rear view of the evacuation system.

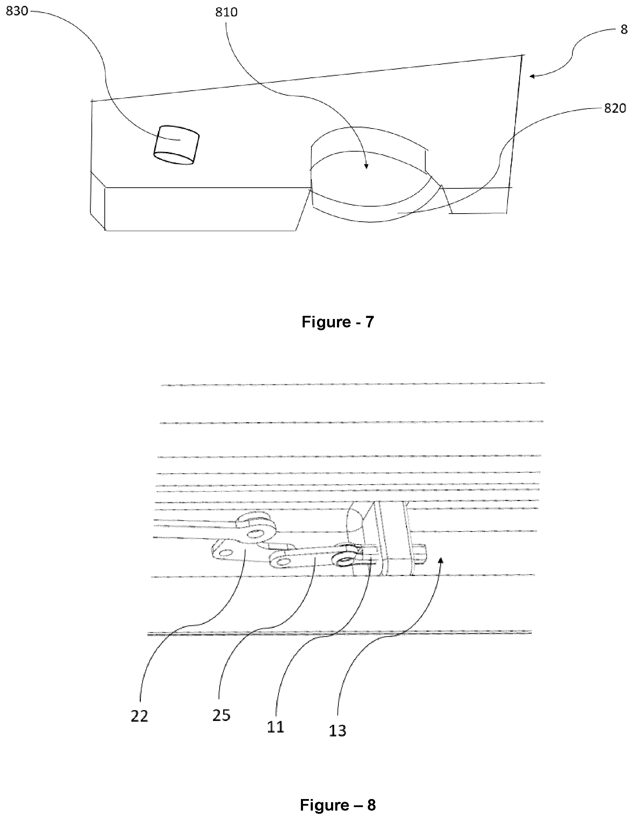

Figure 7 - Perspective view of the latch.
Figure 8 - Perspective view of latch pin, body groove, bellcrank and latch crank.

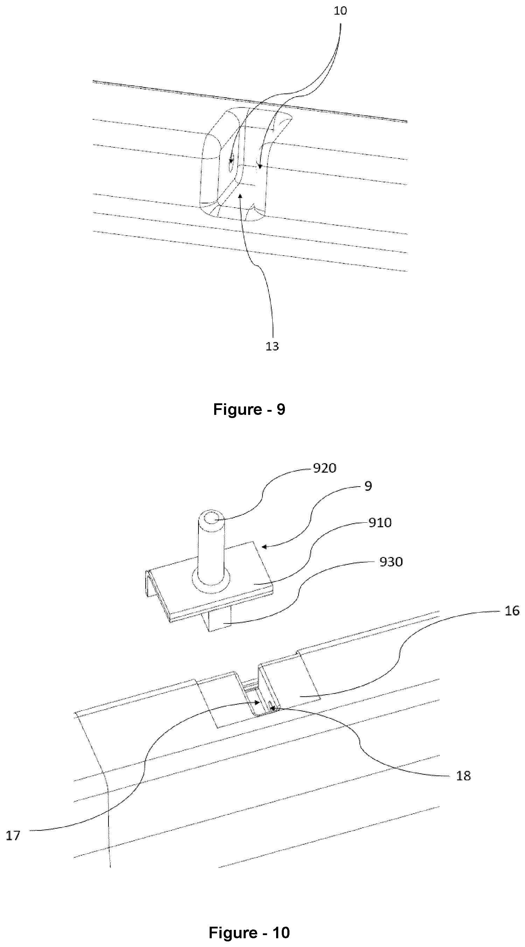

Figure 9 - Perspective view of the first latch channel and body groove.
Figure 10 - Perspective view of latch holder, guide part, guide part groove and third latch channel.

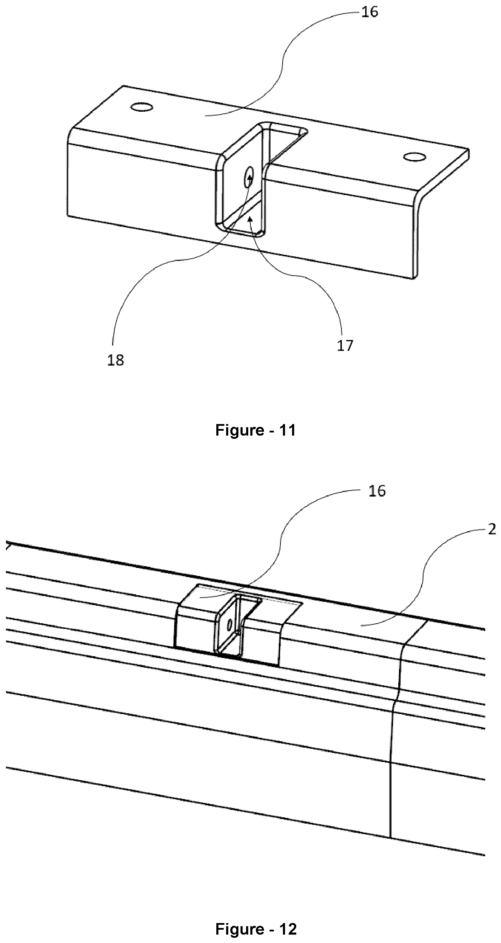

Figure 11 - Perspective view of guide part, guide part groove and third latch channel.
Figure 12 - Perspective view of guide part and body.

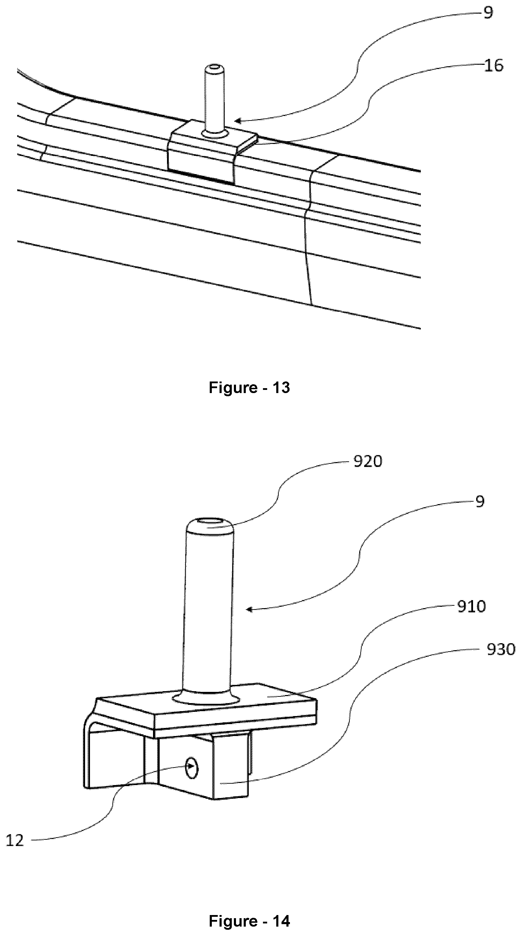

Figure 13 - Perspective view of latch holder and guide part in closed position (I), open position (II) and emergency trigger position (III).
Figure 14 - Perspective view of latch holder, latch holder body, latch holder shaft, latch holder block and second latch channel.

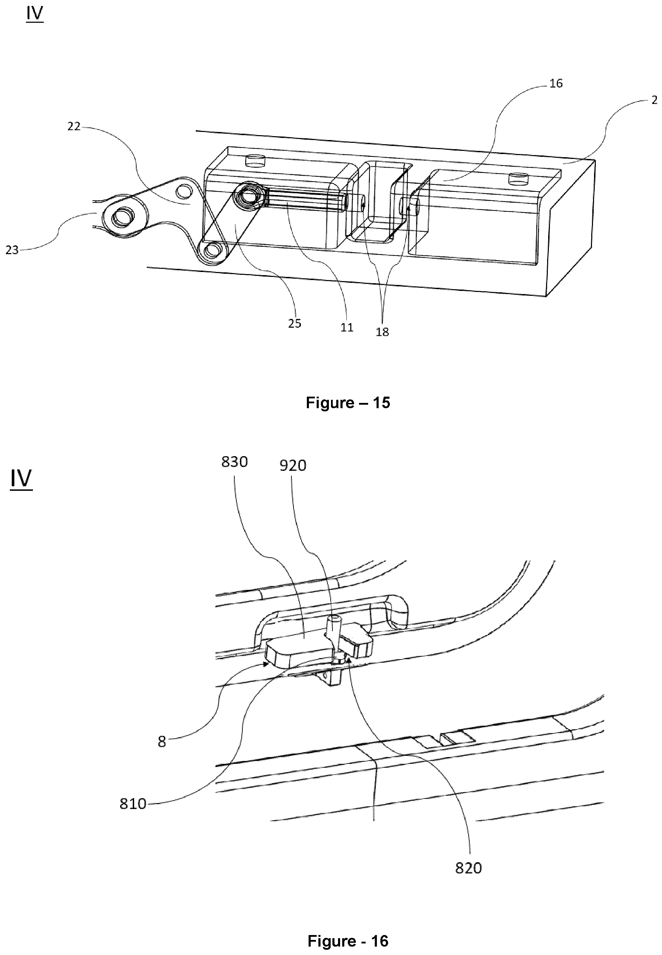

Figure 15 - Perspective view of the latch pin, third latch channel, bellcrank, conversion rod and latch crank in the evacuation position (IV).
Figure 16 - Perspective view of the latch and latch holder in the evacuation position (IV).

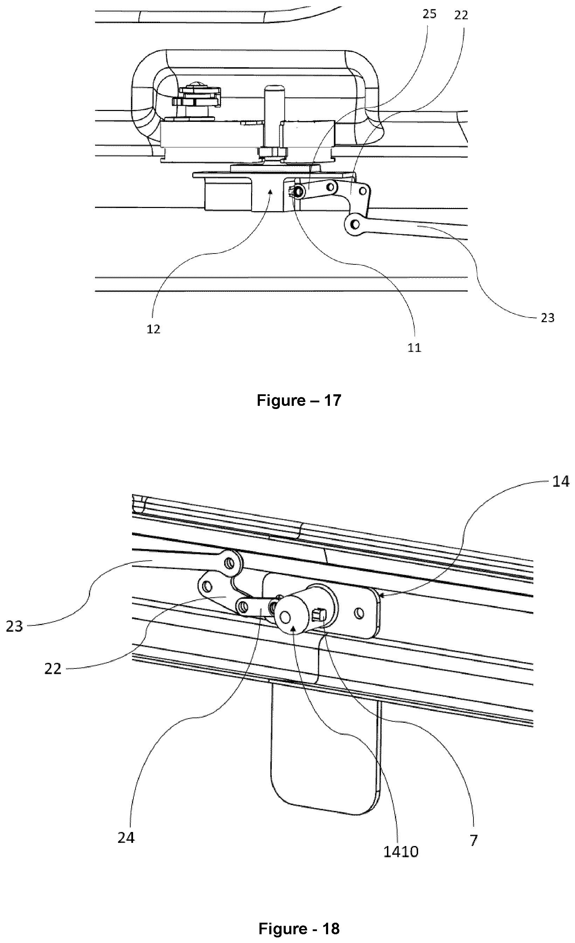

Figure 17 - Perspective view of the latch and latch holder in closed position (I) and emergency trigger position (III).
Figure 18 - Perspective view of hinge pin, hinge interface, hinge seat, bellcrank, conversion rod and hinge crank in closed position (I) and open position (II).

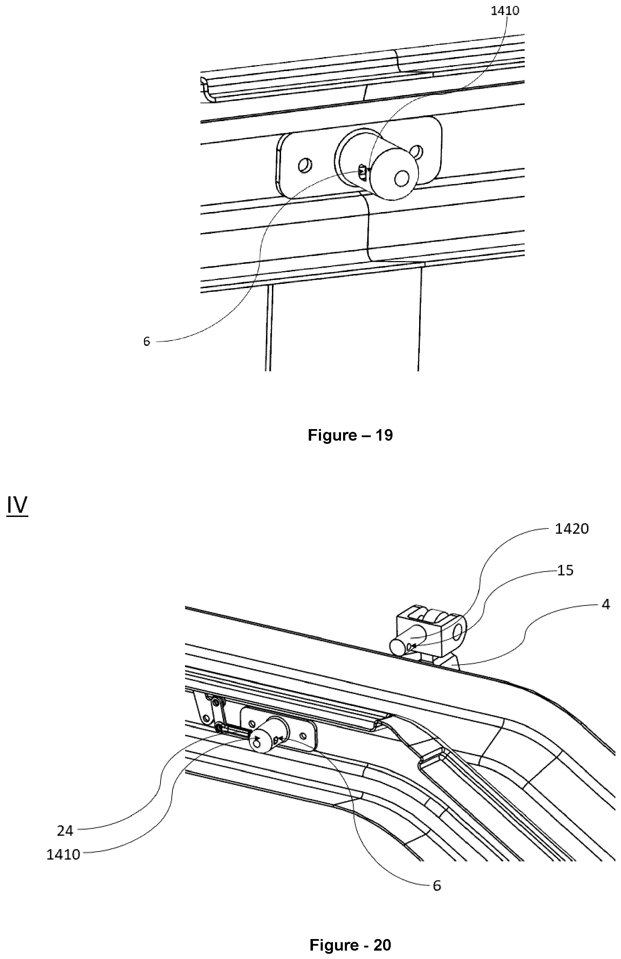

Figure 19 - Perspective view of the hinge housing and the first hinge groove.
Figure 20 - Perspective view of the hinge, hinge interface, hinge seat, cotter pin, first hinge channel and hinge crank in the evacuation position (IV).

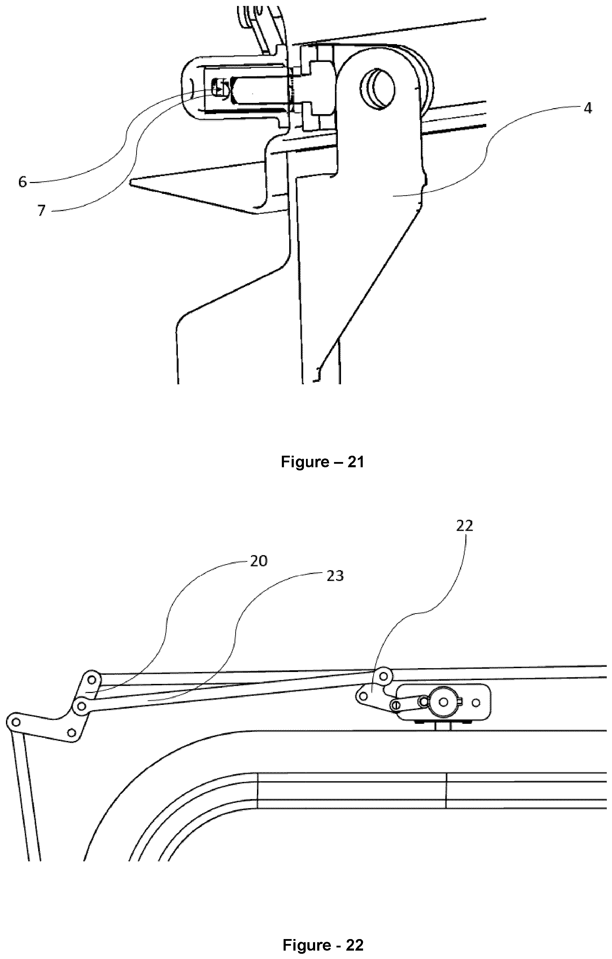

Figure 21 - Perspective view of the hinge, first hinge channel and hinge pin in closed position (I) and open position (II).
Figure 22 - Perspective view of the transfer lever, bellcrank and conversion rod in closed position (I) and open position (II).

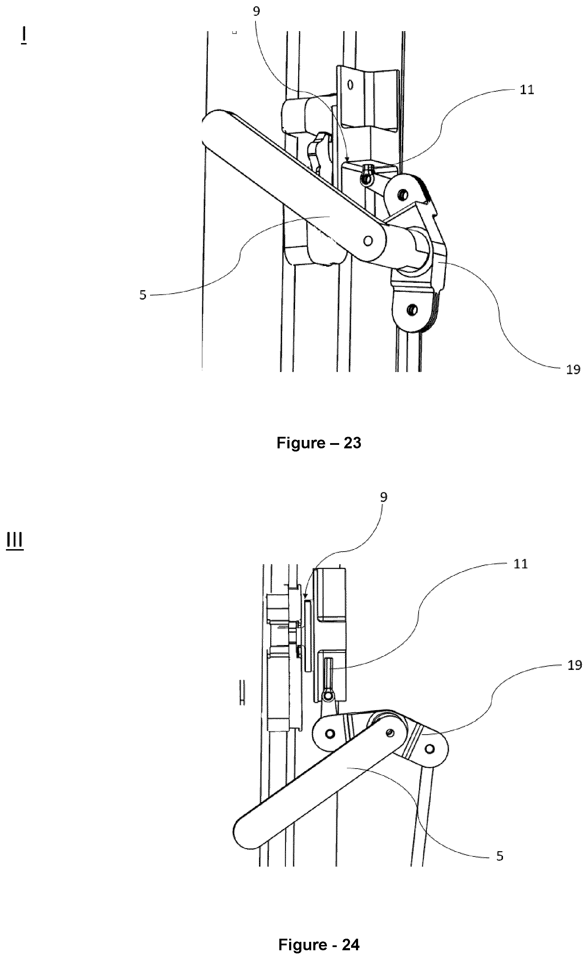

Figure 23 - Perspective view of the trigger, latch holder, latch pin and rotary rod in closed position (I) and open position (II).
Figure 24 - Perspective view of the trigger, latch holder, latch pin and rotary rod in emergency trigger position (III).

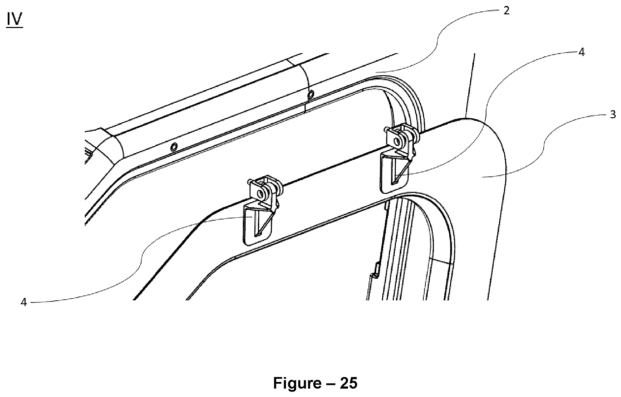

Figure 25 - Perspective view of the body, door and hinges in the evacuation position (IV).

The parts in the figures are numbered one by one and the equivalents of these numbers are given below.
1. Evacuation Mechanism
2. Body
3. Door
4. Hinge
5. Trigger
6. First Hinge Channel
7. Hinge Pin
8. Latch
   810. Latch Cavity
   820. Latch Hook
   830. Latch Spring
9. Latch Holder
   910. Latch Holder Body
   920. Latch Holder Shaft
   930. Latch Holder Block
10. First Latch Channel
11. Latch Pin
12. Second Latch Channel
13. Body Cavity
14. Hinge Interface
   1410. Hinge Slot
   1420. Cotter Pin
15. Second Hinge Channel
16. Guide Part
17. Guide Part Cavity
18. Third Latch Channel
19. Rotating Rod
20. Transmission Lever
21. Transmission Rod
22. Bellcrank
23. Transformation Rod
24. Hinge Crank
25. Latch Crank
26. Transfer Rod
I. Closed Position
II. Open Position
III. Emergency Trigger Position
IV. Evacuation Position

Evacuation mechanism (1), comprising a body (2), a door (3) on the body (2), which allows the user access to the body (2) or prevents access to the body (2), at least one hinge (4) on the door (3), allowing the door (3) to be supported on the body (2) and allowing the door (3) to be opened by rotating around the axis on which the door (3) is supported on the body (2), at least one trigger (5) for triggering the door (3), a first hinge channel (6), which is a longitudinally extending opening located on the hinge (4), at least one hinge pin (7) located on the hinge (4) and extending along its length, a closed position (I) in which the door (3) surrounds the body (2) in a form-fitting manner, the door (3) being closed on the body (2), an open position (II) in which the hinge pin (7) contacts the first hinge channel (6) within the first hinge channel (6), the door (3) being moved out of the body (2) by means of rotation of the hinge (4) from the closed position (I) to allow the user to access the body (2), an emergency trigger position (III) in which the hinge pin (7) protrudes from the first hinge channel (6), the distance between the first hinge channel (6) and the hinge pin (7) being a distance between the first hinge channel (6) and the hinge pin (7), in which the trigger (5) is triggered in a situation where the user has to be evacuated from the body (2), an evacuation position (IV) in which the door (3) is brought from the emergency trigger position (III) so that the hinge (4) and the body (2) move independently of each other, and the door (3) and hinge (4) are pushed out of the body (2), allowing the user to evacuate from the body (2), at least one latch (8) on the door (3) for locking the door (3), at least one latch holder (9) located on the body (2), which enables the door (3) to be locked in the closed position (I) by being placed in the latch (8), and enables the door (3) to be opened in the open position (II) when it is brought out of the latch (8) so as to keep a distance between it and the latch (8).

The invention is an evacuation mechanism (1), comprising a first latch channel (10), which is a first latch channel (10) disposed on the body (2) so as to be opposed to the latch (8) in the closed position (I), at least one latch pin (11) movably arranged in the first latch channel (10) and extending along its length, a second latch channel (12), which is a longitudinally extending aperture located on the latch holder (9), allowing the door (3) to be brought to the open position (II) by ensuring that the latch holder (9) remains on the body (2) in the open position (II) in which it is brought out of the first latch channel (10) and the second latch channel (12) from the closed position (I) in which it is located in the first latch channel (10) and the second latch channel (12), latch pin (11), which is brought from the closed position (I) to the emergency trigger position (III) by triggering the trigger (5) from the second latch channel (12) and bringing it to the first latch channel (10), allowing the door (3) to be evacuated in the evacuation position (IV).

The hinge pin (7), which provides the structural connection of the hinge (4) with the door (3) and the body (2), is removed from the first hinge channel (6) in the emergency trigger position (III), thus breaking the structural connection of the door (3) and the body (2) through the hinge (4) (Figure -18, Figure -19, Figure -20, Figure -21).

In this way, it is ensured that the latch holder (9) remains on the body (2) in the closed position (I), open position (II) and emergency trigger position (III), while it is left on the door (3) in the evacuation position (IV) and the door (3) can be removed from the body (2) in case the lock function of the latch (8) is disrupted. The structural connections of the hinge (4) and latch (8) with the body (2) are simultaneously disconnected (Figure -1, Figure -3, Figure -4, Figure -10, Figure -13, Figure -14, Figure -16, Figure -17, Figure -23, Figure -24).

In one embodiment of the invention, the evacuation mechanism (1), comprising a body cavity (13) in the body (2) with a recess suitable for accommodating the latch holder (9), a latch cavity (810) on the latch (8), into which a latch holder (9) can be inserted, a latch hook (820) located on the latch (8), which ensures contact between the latch (8) and the latch holder (9) by surrounding the latch holder (9) so that the latch (8) remains locked in the closed position (I), the emergency trigger position (III) and the evacuation position (IV), a latch spring (830), which is a torsion spring, generating a torque that causes the latch hook (820) to remain in a position surrounding the latch cavity (810) so that the latch (8) remains locked, a latch holder body (910), form-fit with the body (2), located on the latch holder (9), the extension extending from the latch holder body (910) facing the latch (8), which in the open position (II) is located outside the latch cavity (810) and on the body (2) so as to maintain a distance between the latch (8) and the latch holder (9), in the closed position (I), at least one latch holder shaft (920), which is located in the latch cavity (810) in the emergency trigger position (III) and in the evacuation position (IV) and ensures contact between the latch (8) and the latch holder (9), at least one latch holder block (930), which is an extension extending from the latch holder body (910) facing the body (2), containing a second latch channel (12), so that in the open position (II) the latch holder (9) remains on the body (2) and in the evacuation position (IV) the latch holder (9) together with the latch (8) remains on the door (3). In this way, it is ensured that the latch holder (9) remains on the body (2) in the closed position (I), open position (II) and emergency trigger position (III), while it is left on the door (3) in the evacuation position (IV) and the door (3) can be discharged from the body (2) in case the lock function of the latch (8) is disrupted (Figure - 1, Figure -3, Figure -4, Figure -7, Figure -10, Figure -13, Figure -14, Figure -16, Figure -17, Figure -23, Figure -24).

In one embodiment of the invention, the evacuation mechanism (1), comprising a hinge interface (14) located between the body (2) and the hinge (4), which ensures the structural connection of the hinge (4) with the body (2) by ensuring contact of the hinge (4) with the body (2), and ensures the structural disconnection of the hinge (4) from the body (2) by maintaining a distance between the hinge (4) and the body (2), a hinge slot (1410) located on the hinge interface (14), in the form of a recess towards the body (2), a cotter pin (1420) which, entering the hinge slot (1410), is fixed on the body (2) by means of the hinge pin (7), allowing the hinge (4) to move rotatably, closed position (I), being an opening on the cotter pin (1420), extending along its length parallel to the direction in which the hinge pin (7) extends and perpendicular to the direction in which the cotter pin (1420) extends, a second hinge channel (15) co-axial with the first hinge channel (6) in the open position (II) and emergency trigger position (III), allowing the hinge pin (7) to be located in the closed position (I) and open position (II), allowing the hinge pin (7) to be removed in the emergency trigger position (III), and having a distance from the first hinge channel (6) in the evacuation position (IV). In the closed position (I) and the open position (II), the hinge pin (7) passes through the first hinge channel (6) and the second hinge channel (15) and provides a structural connection between the hinge slot (1410) and the cotter pin (1420), so that the structural connection of the body (2) and the door (3) is provided by means of the hinge (4). In the emergency trigger position (III), the hinge pin (7) leaves the second hinge channel (15) and is located only in the first hinge channel (6), thereby breaking the structural connection between the hinge slot (1410) and the cotter pin (1420), thereby breaking the structural connection of the body (2) and the door (3). The hinge slot (1410) and cotter pin (1420) are form compatible (Figure -18, Figure -19, Figure -20).

In one embodiment of the invention, the evacuation mechanism (1), comprising at least one guide part (16) located on the body (2) between the body (2) and the latch holder (9), which allows the latch holder (9) to be brought from the emergency trigger position (III) to the evacuation position (IV) in an aligned manner, a guide part cavity (17) in the form of a recess on the guide part (16), the latch holder body (910) on the latch holder (9), which is form-fit with the guide part (16), the latch holder block (930), which is an extension extending from the latch holder body (910) facing the guide part (16), in which the second latch channel (12) is provided, a third latch channel (18) located on the guide part (16) and being a longitudinally extending aperture, coaxial with the first latch channel (10) and the second latch channel (12), which in the closed position (I), the open position (II) and the emergency trigger position (III) is opposed to the body cavity (13). The guide part cavity (17) ensures that the door (3) moves in alignment with the door (3) when the door (3) moves between the closed position (I) and the open position (II). The latch pin (11) is located in the first latch channel (10), the second latch channel (12) and the third latch channel (18) in the closed position (I) and open position (II), providing structural connection between the body (2), the latch holder (9) and the guide part (16), In the emergency trigger position (III), it exits the second latch channel (12) and is located in the first latch channel (10) and the third latch channel (18), thus breaking the structural connection between the latch holder (9) and the body (2) in the emergency trigger position (III) (Figure -8, Figure -9, Figure -10, Figure -11, Figure -12, Figure -13).

In one embodiment of the invention, the evacuation mechanism (1), comprising trigger (5), which is rotated around the axis on which it is supported by turning it from the extension extending outwards from the axis on which it is supported, a rotating rod (19) having a latch pin (11) in its extension extending outwards from the axis on which it is supported, which is rotated and moved around the axis on which it is supported by means of a trigger (5), at least one transmission lever (20) rotatably rotatable about the axis on which it is supported on the body (2), providing transmission of the movement of the rotating rod (19), at least one transmission rod (21) connected to the transmission lever (20) at a point different from the point on which the transmission lever (20) is supported, transmitting the movement of the rotating rod (19) to the transmission lever (20). In this way, when the user triggers the trigger (5), the movement of the trigger (5) is simultaneously transferred to the lock close to the trigger (5) and the other two locks. By means of the rotating rod (19) and transmission rod (21) to which the trigger (5) is connected, the movement of the trigger (5) is simultaneously transferred to the other two locks and two hinges (4) by means of the transmission lever (20) and transfer rod (26) (Figure -6).

In one embodiment of the invention, the evacuation mechanism (1), comprising multiple bellcrank (22) rotatable about the axis on which it is supported on the body (2), connected to the hinge pin (7) and the latch pin (11), enabling simultaneous transmission of the movement of the transmission lever (20) to the hinge pin (7) and the latch pin (11), at least one transformation rod (23), one end of which is rotatably connected to the transmission lever (20) and the other end to the bellcrank (22), being a structural part for transferring the movement of the transmission lever (20) to the bellcrank (22), at least one hinge crank (24), one end of which is connected to the bellcrank (22) and the other end to the hinge pin (7), both ends of which are rotatably connected, so that the rotary movement of the bellcrank (22) is transmitted to the hinge pin (7) as linear movement, at least one latch crank (25), one end of which is connected to the bellcrank (22), the other end of which is connected to the latch pin (11), both ends of which are rotatably connected, so that the rotary movement of the bellcrank (22) is transmitted to the latch pin (11) as linear movement. The bellcrank (22) is a toggle lever. The latch pin (11) is mounted so that it moves linearly in the third latch channel (18). In this way, the bellcrank (22), latch crank (25), latch pin (11) and third latch channel (18) form a slider crank mechanism (Figure -6, Figure -15, Figure -18, Figure -22).

In one embodiment of the invention, the evacuation mechanism (1), comprising along the length between each transmission lever (20), both ends of which are connected to successively arranged transmission levers (20), at least one transfer rod (26), which is a structural part for simultaneously transferring the movement of the rotating rod (19) to the hinge pin (7) and the latch pin (11) by means of the transmission levers (20), by virtue of being located almost entirely along the hinge (4) and latch (8) regions around the door (3). The transfer rod (26) is located on the body (2) so as to almost completely encircle the door (3). In this way, when the user triggers the trigger (5), the evacuation mechanism (1) is triggered simultaneously (Figure -6).

In one embodiment of the invention, the evacuation mechanism (1), comprising the transfer rod (26) connected to the transmission lever (20), wherein the point at which it is connected to the transmission lever (20) is located between the point at which the transmission lever (20) is supported and the point at which the transmission rod (21) is connected to the transmission lever (20), thereby rotating the transmission lever (20) in a direction opposite to the direction of rotation of the bellcrank (22) due to the vibration to which the hinge pin (7) and the latch pin (11) are subjected, thereby ensuring an off-center mounting relationship. In this way, if the hinge pin (7) and latch pin (11) tend to come out of the slots they are in due to vibration, the moment application of the transmission lever (20) prevents the hinge pin (7) and latch pin (11) from coming out of their slots. During the hinge pin (7) and latch pin (11) coming out of the slots to which they belong, the rotational moment caused by the bellcrank (22) and the rotational moments caused on the transmission lever (20) are in opposite directions and equal in magnitude. In this way, it is ensured that the hinge pin (7) and latch pin (11) do not come out of their respective slots (Figure -6, Figure - 22).

In one embodiment of the invention, the evacuation mechanism (1), comprising eccentrically shaped door (3), hinge (4) which is positioned on the door (3) at intervals predetermined by the manufacturer and which enables the door (3) in eccentric form to be opened and closed effectively, transmission lever (20), transmission rod (21), bellcrank (22), transformation rod (23), hinge crank (24), latch crank (25) and transfer rod (26) positioned on the body (2) at intervals predetermined by the manufacturer. Preferably, two hinges (4) are provided, so that the door (3) in eccentric form can be rotated in alignment. Along the perimeter of the door (3), the door (3) is locked to the body (2) at three different points, thus ensuring that the door (3) in eccentric form is locked. There are three transmission lever (20), transmission rod (21), bellcrank (22), transformation rod (23), hinge crank (24), latch crank (25) and transfer rod (26) along the periphery of the door (3) (Figure -1, Figure -2, Figure -3, Figure -6).

In one embodiment of the invention, the evacuation mechanism (1), comprising in the closed position (I), the user rotates the trigger (5) so that the hinge pin (7) is disengaged from the second hinge groove (15) and the latch pin (11) is disengaged from the second latch channel (12), bringing the door (3) into the emergency trigger position (III), from the emergency trigger position (III), the user, independent of the body (2), throws the door (3) out of the body (2) and brings the door (3) to the evacuation position (IV), the latch holder (9), which remains on the door (3) together with the latch (8) in the evacuation position (IV), thus allowing the user to evacuate from the body (2) in the evacuation position (IV). In an emergency situation where there is a risk of accidental breakage, the user turns the trigger (5) from the closed position (I) to the emergency trigger position (III), then pushes the door (3) outwards and throws the door (3) linearly out of the body (2), In this way, the area occupied by the door (3) in the closed position (I) becomes the opening in the emergency trigger position (III) and the user can evacuate through the aforementioned opening (Figure -1, Figure -4, Figure -5, Figure -6, Figure -15, Figure -16, Figure -20, Figure -23, Figure - 24, Figure -25).

In one embodiment of the invention, the evacuation mechanism (1) comprises a trigger (5) which the user triggers to move the door (3) between the closed position (I) and the emergency trigger position (III). The trigger (5) is preferably a handle, so that the user can easily turn the trigger (5) (Figure -1, Figure -4, Figure -6, Figure -23, Figure -24).

In one embodiment of the invention, the evacuation mechanism (1) comprises a body (2) which is an aircraft. The body (2) is preferably an aircraft, preferably a helicopter (Figure - 1, Figure -2, Figure -3, Figure -4, Figure -5, Figure -6).

## Claims

1. An evacuation mechanism (1), comprising a body (2), a door (3) on the body (2), which allows the user access to the body (2) or prevents access to the body (2), at least one hinge (4) on the door (3), allowing the door (3) to be supported on the body (2) and allowing the door (3) to be opened by rotating around the axis on which the door (3) is supported on the body (2), at least one trigger (5) for triggering the door (3), a first hinge channel (6), which is a longitudinally extending opening located on the hinge (4), at least one hinge pin (7) located on the hinge (4) and extending along its length, a closed position (I) in which the door (3) surrounds the body (2) in a form-fitting manner, the door (3) being closed on the body (2), an open position (II) in which the hinge pin (7) contacts the first hinge channel (6) within the first hinge channel (6), the door (3) being moved out of the body (2) by means of rotation of the hinge (4) from the closed position (I) to allow the user to access the body (2), an emergency trigger position (III) in which the hinge pin (7) protrudes from the first hinge channel (6), the distance between the first hinge channel (6) and the hinge pin (7) being a distance between the first hinge channel (6) and the hinge pin (7), in which the trigger (5) is triggered in a situation where the user has to be evacuated from the body (2), an evacuation position (IV) in which the door (3) is brought from the emergency trigger position (III) so that the hinge (4) and the body (2) move independently of each other, and the door (3) and hinge (4) are pushed out of the body (2), allowing the user to evacuate from the body (2), at least one latch (8) on the door (3) for locking the door (3), at least one latch holder (9) located on the body (2), which enables the door (3) to be locked in the closed position (I) by being placed in the latch (8), and enables the door (3) to be opened in the open position (II) when it is brought out of the latch (8) so that there is a distance between it and the latch (8) **characterized by** a first latch channel (10), which is disposed on the body (2) so as to face the latch (8) in the closed position (I), at least one latch pin (11) movably arranged in the first latch channel (10) and extending along its length, a second latch channel (12), which is a longitudinally extending aperture located on the latch holder (9), allowing the door (3) to be brought to the open position (II) by ensuring that the latch holder (9) remains on the body (2) in the open position (II) in which it is brought out of the first latch channel (10) and the second latch channel (12) from the closed position (I) in which it is located in the first latch channel (10) and the second latch channel (12), latch pin (11), which is brought from the closed position (I) to the emergency trigger position (III) by triggering the trigger (5) from the second latch channel (12) and bringing it to the first latch channel (10), allowing the door (3) to be evacuated in the evacuation position (IV).

2. An evacuation mechanism (1) as in claim 1, **characterised by** a body cavity (13) in the body (2) with a recess for the latch holder (9), a latch cavity (810) on the latch (8), into which a latch holder (9) can be inserted, a latch hook (820) located on the latch (8), which ensures contact between the latch (8) and the latch holder (9) by surrounding the latch holder (9) so that the latch (8) remains locked in the closed position (I), the emergency trigger position (III) and the evacuation position (IV), a latch spring (830), which is a torsion spring, generating a torque that causes the latch hook (820) to remain in a position surrounding the latch cavity (810) so that the latch (8) remains locked, a latch holder body (910), form-fit with the body (2), located on the latch holder (9), the extension extending from the latch holder body (910) facing the latch (8), which in the open position (II) is located outside the latch cavity (810) and on the body (2), thereby maintaining a distance between the latch (8) and the latch holder (9), at least one latch holder shaft (920), which is located in the latch cavity (810) in the closed position (I), the emergency trigger position (III) and the evacuation position (IV) and ensures contact between the latch (8) and the latch holder (9), at least one latch holder block (930), which is an extension extending from the latch holder body (910) facing the body (2), in which a second latch channel (12) is provided, so that in the open position (II) the latch holder (9) remains on the body (2) and in the evacuation position (IV) the latch holder (9) together with the latch (8) remains on the door (3).

3. An evacuation mechanism (1) as in claim 1 or 2, **characterised by** a hinge interface (14) located between the body (2) and the hinge (4), which ensures the structural connection of the hinge (4) with the body (2) by ensuring contact of the hinge (4) with the body (2), and ensures the structural disconnection of the hinge (4) from the body (2) by maintaining a distance between the hinge (4) and the body (2), a hinge slot (1410) located on the hinge interface (14), in the form of a recess towards the body (2), a cotter pin (1420) which, entering the hinge slot (1410), is fixed on the body (2) by means of the hinge pin (7), allowing the hinge (4) to move rotatably, an aperture on the cotter pin (1420), parallel to the direction in which the hinge pin (7) extends and perpendicular to the direction in which the cotter pin (1420) extends, coaxial with the first hinge channel (6) in the closed position (I), open position (II) and emergency trigger position (III), a second hinge channel (15) spaced apart from the first hinge channel (6) in the evacuation position (IV), allowing the hinge pin (7) to be located in the closed position (I) and in the open position (II), and allowing the hinge pin (7) to be removed therefrom in the emergency trigger position (III).

4. A evacuation mechanism (1) as in claim 2 or claim 3, **characterised by** at least one guide part (16) on the body (2), located between the body (2) and the latch holder (9), for aligning the latch holder (9) from the emergency trigger position (III) to the evacuation position (IV), a guide part cavity (17) in the form of a recess on the guide part (16), the latch holder body (910) on the latch holder (9), which is form-fit with the guide part (16), the latch holder block (930), which is an extension extending from the latch holder body (910) facing the guide part (16), in which the second latch channel (12) is provided, a third latch channel (18) located on the guide part (16) and extending through the through opening, which in the closed position (I), in the open position (II) and in the emergency trigger position (III) is opposed to the body cavity (13) and is coaxial with the first latch channel (10) and the second latch channel (12).

5. A evacuation mechanism (1) as in any one of the preceding claims, **characterised by** the trigger (5), which is rotated around the axis on which it is supported by turning it from the extension extending outwards from the axis on which it is supported, a rotating rod (19) having a latch pin (11) in its extension extending outwards from the axis on which it is supported, which is rotated and moved around the axis on which it is supported by means of a trigger (5), at least one transmission lever (20), rotatable about the axis on which it is supported on the body (2), for transmitting the movement of the rotating rod (19), at least one transmission rod (21) connected to the transmission lever (20) at a point different from the point at which the transmission lever (20) is supported, the rotating rod (19) transmitting its movement to the transmission lever (20).

6. A evacuation mechanism (1) as in claim 5, **characterised by** multiple bellcranks (22), rotatable around the axis on the body (2), connected to the hinge pin (7) and the latch pin (11), which enable the movement of the transmission lever (20) to be transmitted simultaneously to the hinge pin (7) and the latch pin (11), at least one transformation rod (23), one end of which is rotatably connected to the transmission lever (20) and the other end to the bellcrank (22), being a structural part for transferring the movement of the transmission lever (20) to the bellcrank (22), at least one hinge crank (24), one end of which is connected to the bellcrank (22) and the other end to the hinge pin (7), both ends of which are rotatably connected, so that the rotary movement of the bellcrank (22) is transmitted to the hinge pin (7) as linear movement, at least one latch crank (25) connected at one end to the bellcrank (22) and at the other end to the latch pin (11), both connected ends being rotatably connected, the rotary movement of the bellcrank (22) being transmitted as linear movement to the latch pin (11).

7. A evacuation mechanism (1) as in claim 5 or claim 6, **characterized by** extending along the length between each transmission lever (20), both ends of which are connected to successive transmission levers (20), at least one transfer rod (26), which is a structural part that enables the movement of the rotating rod (19) to be transferred simultaneously to the hinge pin (7) and the latch pin (11) by means of transmission levers (20), by virtue of being located almost entirely along the regions with hinge (4) and latch (8) located around the door (3).

8. A evacuation mechanism (1) as in claim 7, **characterized by** the point at which it is connected to the transmission lever (20) is located between the point at which the transmission lever (20) is supported and the point at which the transmission rod (21) is connected to the transmission lever (20), whereby the hinge pin (7) and the latch pin (11) are subjected to vibration, thereby causing the transmission lever (20) to be connected to the transmission lever (20), a transfer rod (26) connected to the transmission lever (20), which rotates the bellcrank (22) in a direction opposite to the direction of rotation of the transmission lever (20) so that it is in an off-center mounting relationship.

9. A evacuation mechanism (1) as in claim 7 or claim 8, **characterized by** door (3) in eccentric form, hinge (4), which is positioned on the door (3) at intervals predetermined by the manufacturer and ensures effective opening and closing of the door (3) in eccentric form, a transmission lever (20), a transmission rod (21), a bellcrank (22), a transformation rod (23), a hinge crank (24), a latch crank (25) and a transfer rod (26) positioned at intervals predetermined by the manufacturer on the body (2).

10. - An evacuation mechanism (1) as in any one of claims 3-9, **characterized by** a closed position (I), the user rotates the trigger (5) so that the hinge pin (7) comes out of the second hinge channel (15) and the latch pin (11) comes out of the second latch channel (12), bringing the door (3) into the emergency trigger position (III),
- from the emergency trigger position (III), the user throws the door (3) out of the body (2) independently of the body (2), bringing the door (3) to the evacuation position (IV),
- a latch holder (9) remains on the door (3) together with the latch (8) in the evacuation position (IV), thereby allowing the user to evacuate from the body (2) in the evacuation position (IV).

11. An evacuation mechanism (1) as in any one of the preceding claims, **characterized in that** the user triggers the trigger (5) to move the door (3) between the closed position (I) and the emergency trigger position (III).

12. An evacuation mechanism (1) as in any one of the preceding claims, **characterized in that** the body (2) is an aircraft.
